# EUROPÄISCHE PATENTSCHRIFT

(11) **EP 3 042 555 B1**
(45) Veröffentlichungstag und Bekanntmachung des Hinweises auf die Patenterteilung: **09.08.2017**
(21) Anmeldenummer: 15150252.3
(22) Anmeldetag: 07.01.2015
(51) Int. Cl.: A01C 5/06, A01C 7/04

(54) **Säschar mit verstellbarer Scharspitze**
Seed drill coulter with adjustable blade head
Semeuse équipée de pointe de soc réglable

(43) Veröffentlichungstag der Anmeldung: 13.07.2016
(73) Patentinhaber: Kverneland AS, 4355 Kvernaland (NO)
(72) Erfinder: Schumacher, Ferdinand, 59510 Lippetal (DE); Schanzenbach, Volker, 49170 Hagen a.T.W. (DE)
(74) Vertreter: Schweiger, Johannes

(56) Entgegenhaltungen:
- EP-A1- 2 486 781
- US-A- 2 159 652
- US-A- 6 038 990

## Beschreibung

Die vorliegende Erfindung betrifft ein Säschars gemäß dem Oberbegriff des Anspruchs 1 sowie eine Einzelkornsämaschine mit einem solchen Säschar.

Solch ein Säschar ist aus dem Stand der Technik bekannt. Bei der Ausbringung von Saatgut besteht jedoch bei herkömmlichen Säscharen das Problem, dass das Saatgut aufgrund unterschiedlicher Bedingungen wie Saatgutart, Hanglage usw,, nicht an der gewünschten Position landet. Das Saatgut liegt häufig seitlich in der Furche, sodass das Saatgut nicht in der optimalen Tiefe in der Furche angeordnet werden kann und das Aussäergebnis somit nicht optimal ist.

Die Druckschrift EP 2 486 781 A1 offenbart ein Säschar, das vertikal verstellt werden kann.

Es ist daher die Aufgabe der vorliegenden Erfindung, ein Säschar zur Verfügung zu stellen, mit dem das Aussäergebnis des Saatgutes optimierbar ist.

Diese Aufgabe wird mit dem Säschar und der Einzelkornsämaschine gemäß den nebengeordneten Ansprüchen gelöst. Vorteilhafte Weiterbildungen der Erfindung sind in den Unteransprüchen angegeben. In den Rahmen der Erfindung fallen sämtliche Kombinationen aus zumindest zwei in der Beschreibung, den Ansprüchen und/oder den Figuren angegebenen Merkmalen. Soweit Wertebereiche angegeben sind, sollen auch etwaige Zwischenwerte als Grenzwerte mit offenbart gelten.

Erfindungsgemäß weist das Säschars eine Scharspitze und eine Vereinzelungseinrichtung mit einem Kornabgabebereich auf, in dem ein vereinzeltes Korn die Vereinzelungseinrichtung in Richtung Erdreich verlässt, wobei die Scharspitze in Bezug auf den Kornabgabebereich verstellbar ausgebildet ist.

Der Grundgedanke der Erfindung besteht darin, dass die Position der Scharspitze und insbesondere die Position des tiefsten Punkts der Scharspitze optimal eingestellt werden kann, so dass das auszubringende Saatgut stets am tiefsten Punkt der Furche angeordnet werden kann. Dadurch ist das Saatgut stets in der optimalen Tiefe in das Erdreich einbringbar, so dass das Aussäergebnis optimal ist.

Insbesondere ist die Vereinzelungseinrichtung ein Säherz mit einer Säscheibe, wobei die Scharspitze in Bezug auf die Säscheibe verstellbar ausgebildet ist.

Der grundsätzliche Aufbau und die prinzipielle Funktionsweise des Säherzes sind aus der Druckschrift EP 2 341 765 bekannt.

Erfindungsgemäß ist die Scharspitze senkrecht zur Säscheibenebene und/oder quer zu einer Fahrtrichtung einer Zugmaschine, die das Säschar zieht, verstellbar ausgebildet. Die Säscheibenebene ist diejenige Ebene, in der die Säscheibe mit ihrer Haupterstreckungsebene angeordnet ist. Durch die senkrechte Verstellbarkeit beziehungsweise quer zur Fahrtrichtung mögliche Verstellbarkeit ist vorteilhaft erreichbar, dass die Position der Scharspitze optimal, insbesondere in Abhängigkeit des auszubringenden Saatguts, eingestellt werden kann.

Es kann insbesondere vorgesehen sein, dass der tiefste Punkt der Scharspitze in Überdeckung mit einer Flugbahn eines Korns beziehungsweise der Körner bringbar ist. Mit anderen Worten: Die Flugbahn der Körner verläuft durch den tiefsten Punkt der Scharspitze, wodurch eine Ausbringung der Körner an den tiefsten Punkt der Furche möglich ist.

In einer bevorzugten Weiterbildung ist vorgesehen, dass die Scharspitze verstellbar an einer, insbesondere senkrecht zur Säscheibe angeordneten, Stange, bevorzugt eine Gewindestange, insbesondere mit einem Außengewinde, angeordnet ist. Insbesondere kann die Scharspitze an ihrem oberen Ende mit der Stange verbunden sein. Dadurch ergibt sich eine äußerst effiziente Verstellmöglichkeit der Scharspitze. Insbesondere kann es weiterhin vorgesehen sein, dass die Scharspitze durch, insbesondere zwei, Muttern, insbesondere Rändelmuttern, an der Stange verstellbar fixiert ist. Insbesondere kann durch Lösen der Muttern von der Scharspitze die Verstellung der Scharspitze ermöglicht werden. Soweit die gewünschte Position der Scharspitze erreicht ist, werden die Muttern wieder zusammengeführt und befestigen die Scharspitze. Insbesondere kann die Scharspitze in ihrem oberen Bereich durch die beiden Muttern festgeklemmt werden.

In einer bevorzugten Ausführungsform ist die Stange an einem unteren Ende eines Flansches befestigt. In einer Weiterbildung kann der Flansch in seinem unteren Ende von der Säscheibenebene beabstandet sein, wobei der Flansch in seinem unteren Ende insbesondere parallel zur Säscheibenebene angeordnet ist. Dadurch ergeben sich eine besonders effiziente Befestigung der Stange und ein besonders einfaches Verstellen der Scharspitze.

In einer Weiterbildung ist es vorgesehen, dass die Scharspitze, insbesondere automatisch, durch Auswahl des auszubringenden Saatgutes verstellbar ist. Unterschiedliche Saatgutarten weisen beim Ausbringen unterschiedliche Flugbahnen auf. In Kenntnis der unterschiedlichen Flugbahnen können die optimalen Positionen der Scharspitze je nach Saatgutart ausgewählt und eingestellt werden. Dies kann insbesondere automatisch erfolgen. Dazu kann die, insbesondere empirisch ermittelte, Information über das Saatgut in eine dem Säschar bzw. der Einzelkornsämaschine zugeordnete Datenverarbeitungsanlage eingearbeitet werden und in Abhängigkeit dieser Eingabe wird die Position der Scharspitze optimal eingestellt.

In einer besonderen Ausführungsform ist die Scharspitze durch eine, insbesondere im Führerhaus einer Zugmaschine angeordnete, Fernbedienung verstellbar. Das Übertragungsmedium kann zum Beispiel W-LAN, Bluetooth, Funk oder andere drahtlose, aber auch drahtgebundene Übertragungsmittel wie eine Steuerleitung einer ISOBUS-Leitung sein. Dies erleichtert die Verstellung der Scharspitze insbesondere im Vergleich zur manuellen Verstellung.

Es kann insbesondere vorgesehen sein, dass das Säschar bzw. die Einzelkornsämaschine einen Neigungssensor aufweist und/oder dem Säschar bzw. der Einzelkornsämaschine ein Neigungssensor zugeordnet ist, wobei der Neigungssensor zur automatischen Verstellung der Scharspitze in Schräglage und/oder Hanglage ausgebildet und/oder verwendbar ist.

Es kann insbesondere vorgesehen sein, dass die Scharspitze mechanisch verstellbar ist. Alternativ kann die Scharspitze hydraulisch und/oder elektrisch verstellbar sein, wodurch die Verstellung der Scharspitze vereinfacht werden kann.

Ein weiterer Gegenstand der vorliegenden Erfindung betrifft eine Einzelkornsämaschine mit einem erfindungsgemäßen Säschar. Die obigen Ausführungsbeispiele und Merkmale gelten auch für die Einzelkornsämaschine, so dass auf die obigen Ausführungen verwiesen wird.

Weitere Vorteile, Merkmale und Einzelheiten der Erfindung ergeben sich aus der nachfolgenden Beschreibung bevorzugter Ausführungsbeispiele sowie an Hand der Zeichnungen.

Es zeigen schematisch
- Figur 1: eine perspektivische Ansicht eines erfindungsgemäßen Säschars,
- Figur 2: einen Ausschnitt des Säschars,
- Figur 3: das Säschar in einer Seitenansicht,
- Figur 4: einen Teil des Säschars mit einer Scharspitze in einer ersten Position und
- Figur 5: einen Teil des Säschars mit der Scharspitze in einer zweiten Position.

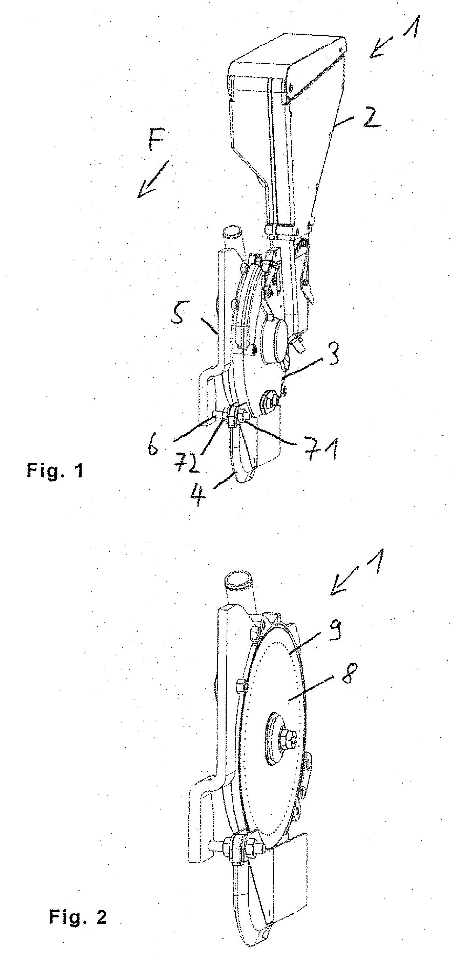

Figur 1 zeigt schematisch ein erfindungsgemäßes Säschar 1, das in einer Fahrtrichtung F von einer Zugmaschine gezogen werden kann. Das Säschar 1 weist in seinem oberen Bereich einen Tank 2 auf, in den das auszubringende Saatgut eingefüllt wird. Unter dem Tank 2 befindet sich ein Säherz 3, also eine Vereinzelungseinrichtung. Der grundsätzliche Aufbau und die prinzipielle Funktionsweise des Säherzes 3 sind aus der Druckschrift EP 2 341 765 bekannt.

Das Säschar 1 weist einen Flansch 5 auf, der sich von oben nach unten erstreckt und in seinem oberen Bereich am Säherz 3 befestigt ist. Nach unten hin weist der Flansch 5 einen quer zur Fahrtrichtung F weggebogenen Teil auf. An diesem weggebogenen Teil beziehungsweise Ende ist eine Gewindestange 6 angeordnet, die quer zur Fahrtrichtung F verläuft. An dieser Gewindestange sind zwei Muttern 71 und 72 angeordnet. Die Muttern 71, 72 fixieren einen oberen Bereich einer Scharspitze 4. Die Scharspitze 4 erstreckt sich von oben nach unten in Richtung des nicht dargestellten Erdreichs.

Figur 2 zeigt schematisch das Säschars 1 ohne Tank und ohne Verkleidung des Säherzes 3. Das Säherz 3 weist eine rotierende Säscheibe 8 mit einer Vielzahl von Sälöchern 9 auf, die auf einer Kreisbahn auf der Säscheibe 8 angeordnet sind,

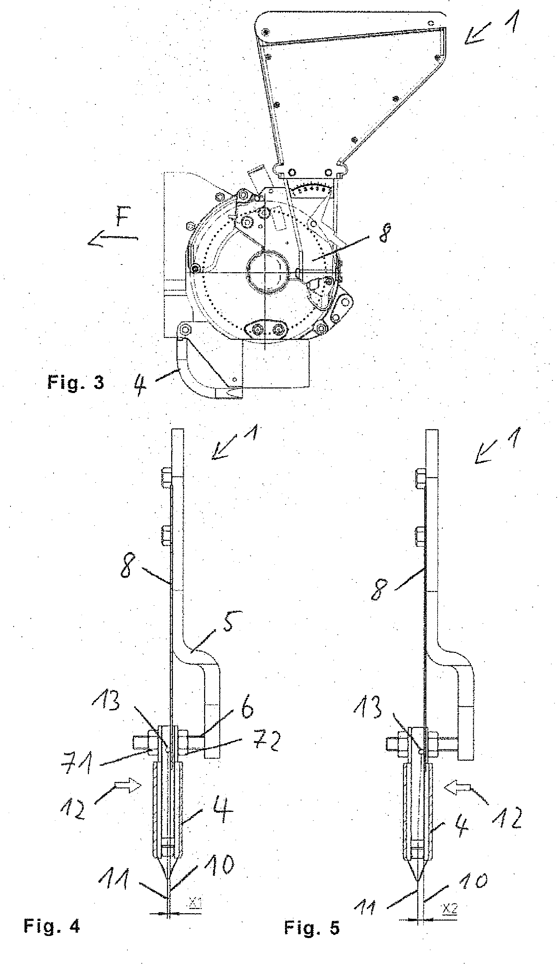

Figur 3 zeigt schematisch das Säschar 1 in einer Seitenansicht, wobei die Verkleidung des Säherzes 3 weggelassen worden ist.

Figur 4 zeigt nur einen Teil des Säschars 1 und zwar ohne Tank und ohne Säherzverkleidung. Auf der Säscheibe 8 ist ein Korn 13 angeordnet. In diesem Beispiel fällt das Korn 13 senkrecht nach unten, so dass sich eine senkrechte Flugbahn 11 ergibt. Die Flugbahn 11 ist mit einem Abstand X1 von der senkrechten Verlängerung der Säscheibe beabstandet. Ein Pfeil 12 deutet an, dass die Scharspitze zuvor derart verstellt worden ist, dass die Flugbahn des Korns 13 genau durch den tiefsten Punkt der Scharspitze 4 verläuft.

Figur 5 zeigt genau wie Figur 4 nur einen Teil des Säschars I. Es befindet sich das Korn 13 auf der Säscheibe 8, Das Korn 13 bewegt sich in einer anderen Flugbahn 11 nach unten als es in der Figur 4 der Fall war. Der Abstand X2 zwischen der Verlängerung der Säscheibe 8 und der Flugbahn 11 beziehungsweise der Verlängerung der Flugbahn 11 des Korns 13 ist größer als in der Figur 4. Um eine Einstellung der Scharspitze 4 zu erreichen, wie sie in Figur 5 dargestellt ist, muss wie mit dem Pfeil 12 angedeutet, die Scharspitze 4 von der Säscheibe 8 wegbewegt werden, damit die Flugbahn 11 durch den tiefsten Punkt der Scharspitze 4 verläuft. Zur Verstellung der Scharspitze 4 werden die beiden Muttern 71, 72 vom oberen Ende der Scharspitze gelöst, danach wird die Scharspitze in die gewünschte Position gebracht und die Muttern 71, 72 wieder an der Scharspitze fixiert.

### Bezugszeichenliste

- 1: Säschar
- 2: Tank
- 3: Säherz
- 4: Scharspitze
- 5: Flansch
- 6: Stange
- 71, 72: Mutter
- 8: Säscheibe
- 9: Sälöcher
- 10: Verlängerung der Säscheibe
- 11: Flugbahn
- 12: Pfeil
- 13: Korn

## Patentansprüche

1. Säschar (1), aufweisend eine Scharspitze (4) und eine Vereinzelungseinrichtung (3) mit einem Kornabgabebereich, in dem ein vereinzeltes Korn (13) die Vereinzelungseinrichtung (3) in Richtung Erdreich verlässt, **dadurch gekennzeichnet, dass** die Scharspitze (4) in Bezug auf den Kornabgabebereieh verstellbar ausgebildet ist, wobei die Scharspitze. (4) senkrecht zur Säscheibenebene einer Säscheibe (8) der Vereinzelungseinrichtung (3) und/oder quer zur Fahrtrichtung (F) verstellbar ausgebildet ist.

2. Säschar (1) nach Anspruch 1, **dadurch gekennzeichnet, dass** die Vereinzelungseinrichrung ein Säherz (3) mit einer Säscheibe (8) ist, wobei die Scharspitze (4) in Bezug auf die Säscheibe (8) verstellbar ausgebildet ist.

3. Säschar (1) nach einem der vorhergehenden Ansprüche, **dadurch gekennzeichnet, dass** ein tiefster Punkt der Scharspitze (4) in Fahrtrichtung (F) in Überdeckung mit einer Flugbahn (11) des Korns (13) bringbar ist.

4. Säschar (1) nach einem der vorhergehenden Ansprüche, **dadurch gekennzeichnet, dass** die Scharspitze (4) verstellbar an einer, insbesondere senkrecht zur Säscheibe (8) angeordneten, Stange (6), bevorzugt eine Gewindestange (6), insbesondere mit einem Außengewinde, angeordnet ist.

5. Säschar (1) nach Anspruch 4, **dadurch gekennzeichnet, dass** die Scharspitze (4) an ihrem oberen Ende mit der Stange (6) verbunden ist.

6. Säschar (1) nach Anspruch 4 oder 5, **dadurch gekennzeichnet, dass** die Scharspitze (4) durch zwei Muttern (71, 72), insbesondere Rändelmuttern, an der Stange (6) fixiert ist.

7. Säschar (1) nach einem der Ansprüche 4 bis 6, **dadurch gekennzeichnet, dass** die Stange (6) an einem unteren Ende eines Flansches (5) befestigt ist, wobei der Flansch (5) in seinem unteren Ende von der Säscheibenebene beabstandet ist, insbesondere parallel zur Säscheibenebene angeordnet ist.

8. Säschar (1) nach einem der vorhergehenden Ansprüche, **dadurch gekennzeichnet, dass** die Scharspitze (4), insbesondere automatisch, durch Auswahl des auszubringenden Saatgutes verstellbar ist, wobei eine Information über das Saatgut in eine dem Säschar (1) zugeordnete Datenverarbeitungsanlage eingearbeitet wird und in Abhängigkeit dieser Eingabe die Position der Scharspitze (4) einstellbar ist.

9. Säschar (1) nach einem der vorhergehenden Ansprüche, **dadurch gekennzeichnet, dass** die Scharspitze (4) fernbedienbar verstellbar ist.

10. Säschars (1) nach einem der vorhergehenden Ansprüche, **dadurch gekennzeichnet, dass** die Scharspitze (4) mechanisch, hydraulisch und/oder elektrisch verstellbar ist.

11. Einzelkornsämaschine, aufweisend ein Säschar (1) nach einem der vorhergehenden Ansprüche.

## Claims

1. A drill coulter (1), comprising a coulter tip (4) and a singling device (3) with a grain dispensing region, in which a singled grain (13) leaves the singling device (3) in the direction of soil, **characterized in that** the coulter tip (4) is formed adjustable with respect to the grain dispensing region, wherein the coulter tip (4) is formed adjustable perpendicularly to the sowing disc plane of a sowing disc (8) of the singling device (3) and/or transversely to the travelling direction (F).

2. The drill coulter (1) according to Claim 1, **characterized in that** the singling device is a sowing heart (3) with a sowing disc (8), wherein the coulter tip (4) is formed adjustable with respect to the sowing disc (8).

3. The drill coulter (1) according to any one of the preceding claims, **characterized in that** a lowest point of the coulter tip (4) can be brought to coincide in travelling direction (F) with a trajectory (11) of the grain (13).

4. The drill coulter (1) according to any one of the preceding claims, **characterized in that** the coulter tip (4) is adjustably arranged on a rod (6), preferably a threaded rod (6), in particular with an external thread, which is arranged in particular perpendicularly to the sowing disc (8).

5. The drill coulter (1) according to Claim 4, **characterized in that** the coulter tip (4) at its upper end is connected to the rod (6).

6. The drill coulter (1) according to Claim 4 or 5, **characterized in that** the coulter tip (4) is fixed on the rod (6) by two nuts (71, 72), in particular knurled nuts.

7. The drill coulter (1) according to any one of the Claims 4 to 6, **characterized in that** the rod (6) is fastened at a lower end of the flange (5), wherein the flange (5) in its lower end is spaced from the sowing disc plane, in particular is arranged parallel to the sowing disc plane.

8. The drill coulter (1) according to any one of the preceding claims, **characterized in that** the coulter tip (4) is adjustable, in particular automatically, by selecting the seed to be sown, wherein information regarding the seed is worked into a data processing system assigned to the drill coulter (1) and the position of the sowing tip (4) is adjustable as a function of this input.

9. The drill coulter (1) according to any one of the preceding claims, **characterized in that** the coulter tip (4) is adjustable by remote control.

10. The drill coulter (1) according to any one of the preceding claims, **characterized in that** the coulter tip (4) is mechanically, hydraulically and/or electrically adjustable.

11. A single grain drill machine, comprising a drill coulter (1) according to any one of the preceding claims.

## Revendications

1. Soc de semoir (1). présentant une pointe de soc (4) et un dispositif d'individualisation (3) comportant une zone de distribution de grains dans laquelle un grain individualisé (13) quitte le dispositif d'individualisation (3) en direction de la terre, **caractérisé en ce que** la pointe de soc (4) est réalisée de manière à être réglable par rapport à la zone de distribution de grains, la pointe de soc (4) étant perpendiculaire au plan de disque semoir d'un disque semoir (8) du dispositif d'individualisation (3) et/ou réglable transversalement au sens de circulation (F).

2. Soc de semoir (1) selon la revendication 1, **caractérisé en ce que** le dispositif d'individualisation est un coeur de semeuse (3) doté d'un disque semoir (8), la pointe de soc (4) étant réalisée de manière à être réglable par rapport au disque semoir (8).

3. Soc de semoir (1) selon une des revendications précédentes, **caractérisé en ce qu'**un point le plus bas de la pointe de soc (4) peut être amené dans le sens de circulation (F) en recouvrement avec une trajectoire (11) du grain (13).

4. Soc de semoir (1) selon une des revendications précédentes, **caractérisé en ce que** la pointe de soc (4) est disposée au niveau d'une barre (6), de préférence une barre filetée (6), dotée en particulier d'un filetage extérieur, disposée en particulier de manière réglable perpendiculairement au disque semoir (8).

5. Soc de semoir (1) selon la revendication 4, **caractérisé en ce que** la pointe de soc (4) est reliée par son extrémité supérieure à la barre (6).

6. Soc de semoir (1) selon la revendication 4 ou 5, **caractérisé en ce que** la pointe de soc (4) est fixée par deux écrous (71, 72), en particulier des écrous crénelés, à la barre (6).

7. Soc de semoir (1) selon une des revendications 4 à 6, **caractérisé en ce que** la barre (6) est fixée à une extrémité inférieure d'une bride (5), la bride (5) étant, à son extrémité inférieure, espacée du plan du disque semoir, en particulier disposée parallèlement au plan du disque semoir.

8. Soc de semoir (1) selon une des revendications précédentes, **caractérisé en ce que** la pointe de soc (4) est réglable, en particulier automatiquement, par sélection des semences à déverser, une information sur la semence étant saisie dans un dispositif de traitement de données associé au soc de semoir (1) et la position de la pointe de semoir (4) étant réglable en fonction de cette saisie,

9. Soc de semoir (1) selon une des revendications précédentes, **caractérisé en ce que** la pointe de semoir (4) est réglable par télécommande.

10. Soc de semoir (1) selon une des revendications précédentes, **caractérisé en ce que** la point de semoir (4) est réglable par système mécanique, hydraulique et/ou électrique.

11. Semeuse de grains individualisés, présentant un soc de semoir (1) selon une des revendications précédentes.
